# EUROPEAN PATENT SPECIFICATION

(11) **EP 4 632 049 B1**
(45) Date of publication and mention of the grant of the patent: **09.09.2026**
(21) Application number: 23919922.7
(22) Date of filing: 06.12.2023
(51) Int. Cl.: C10L 5/04, C10L 5/08, C10L 5/28, C10L 5/36, C10L 9/08, C10B 53/08, C04B 35/645, C04B 35/528

(54) **METHOD FOR PRODUCING AGGLOMERATES MAINLY COMPOSED OF CARBON**
VERFAHREN ZUR HERSTELLUNG HAUPTSÄCHLICH AUS KOHLENSTOFF AUFGEBAUTER AGGLOMERATE
PROCÉDÉ DE PRODUCTION D'AGGLOMÉRATS PRINCIPALEMANT CONSTITUÉS DE CARBONE

(30) Priority: 30.01.2023 JP 2023012213
(43) Date of publication of application: 15.10.2025
(73) Proprietor: JFE Steel Corporation, Tokyo 100-0011 (JP); Kyushu University, National University Corporation, Nishi-ku Fukuoka-shi Fukuoka 819-0395 (JP)
(72) Inventor: DOHI Yusuke, Tokyo 100-0011 (JP); IGAWA Daisuke, Tokyo 100-0011 (JP); ARAKAWA Sara, Tokyo 100-0011 (JP); TAKEHARA Kenta, Tokyo 100-0011 (JP); KAWAI Yuya, Tokyo 100-0011 (JP); TAKASHIMA Takanori, Tokyo 100-0011 (JP); YAMAMOTO Tetsuya, Tokyo 100-0011 (JP); SHIMOYAMA Izumi, Tokyo 100-0011 (JP); HAYASHI Jun-ichiro, Fukuoka-shi, Fukuoka 819-0395 (JP); KUDO Shinji, Fukuoka-shi, Fukuoka 819-0395 (JP); ASANO Shusaku, Fukuoka-shi, Fukuoka 819-0395 (JP)
(74) Representative: Hoffmann Eitle
(86) International application number: PCT/JP2023/043724
(87) International publication number: WO 2024/161787

(56) References cited:
- CN-A- 101 775 321
- CN-A- 106 701 237
- CN-A- 107 903 971
- CN-A- 112 980 481
- JP-A- 2005 194 341
- JP-A- S5 082 112
- JP-A- S5 092 888
- JP-A- S5 346 306
- JP-A- S57 202 378
- HONDA, HIDEMASA: "Coal as a Raw Material for Graphite", TANSO, vol. 1960, no. 27, 1 January 1960 (1960-01-01), JP , pages 11 - 17, XP009558033, ISSN: 0371-5345, DOI: 10.7209/tanso.1960.11
- QIU, J.-S. ZHOU, Y. YANG, Z.-G. WANG, D.-K. GUO, S.-C. TSANG, S.C. HARRIS, P.J.F.: "Preparation of fullerenes using carbon rods manufactured from Chinese hard coals", FUEL, IPC SIENCE AND TECHNOLOGY PRESS , GUILDFORD, GB, vol. 79, no. 11, 1 September 2000 (2000-09-01), GB , pages 1303 - 1308, XP004286272, ISSN: 0016-2361, DOI: 10.1016/S0016-2361(99)00281-1

## Description

### TECHNICAL FIELD

The present disclosure relates to a method of producing an agglomerate mainly composed of carbon.

### BACKGROUND

Patent literature (PTL) 1 discloses a method of producing high-density carbon material. In this production method, a self-sintering carbonaceous powder alone is heated to 400 °C to 600 °C under atmospheric pressure. The heated carbon raw material is then pressed at a pressure of 50 kg/cm² to 400 kg/cm² while being maintained at the above temperature range to produce a molded product. The resulting molded product is then fired and graphitized. The self-sintering carbonaceous powder is bulk mesophase, mesocarbon microbeads, or petroleum-based or coal-based raw coke.

PTL 2 discloses a method of estimating the thermal hysteresis of coal or coke. The method is characterized in that the maximum arrival temperature in the thermal history of coal or coke is estimated in a range of 300 °C or more and less than 600 °C based on the baseline intensity value of the spectrum obtained by Raman spectroscopy measurement.

Non-patent Literature (NPL) 1 discloses the results of a study of coke strength (strength of molded coke for blast furnaces) by an indirect tensile strength test method.

NPL 2 describes a method of producing coke. In this production method, various types of coal including non-coking coal (carbon content of 67.0 wt%-daf to 84.6 wt%-daf, natural logarithm of liquidity of 0 to 1.1) are ground to a particle size of 106 µm or less or finely ground to about 10 µm or less by ball milling, and the ground material is then molded at a temperature of 240 °C and a mechanical pressure of 128 MPa. The molding is then carbonized. This production method is said to be capable of producing coke with a bulk density of 1.10 g/cm³ to 1.49 g/cm³ and a cold tensile strength of 1.6 MPa to 35.1 MPa.

### CITATION LIST

### Patent Literature

PTL 1: JP H1-32162 A
PTL 2: JP 5929075 B2

### Non-patent Literature

NPL 1: A Study on The Tensile Strength of Coke by an Indirect Tensile Strength Test Method (I), Journal of the Fuel Society of Japan, Vol. 54, No. 584, 1975, pp. 983-993, T. Miyagawa et al, [retrieved on October 14, 2022], Internet <https://www.jstage.jst. go.jp/article/jiel922/54/12/54_12_983/_pdf>
NPL 2: K. Uchida, S. Kudo, A. Mori, U. P. M. Ashik, K. Norinaga, Y. Dohi, K. Uebo, and J-i. Hayashi: ISIJ International, 59 (2019), p. 1449.

### SUMMARY

### (Technical Problem)

Most solid carbon materials are used in the form of agglomerates made from coal or a coal-derived high carbon concentration material. In this case, the agglomerate is required to have a predetermined strength and bulk density according to the application. An agglomerate mainly composed of carbon is produced by using liquid phase components, such as coking coal having caking properties or caking agents such as pitch, to bond or fuse particles together and form an agglomerate. However, during agglomeration using the liquid phase, the liquid phase components decompose and produce gas. This causes foaming in the agglomerate, which can make the agglomerate porous and reduce its bulk density, which is problematic. Another problem is that coking coal is more expensive than non-coking coal, and caking agents such as pitch are even more expensive than coking coal.

When coking coal or pitch is not used, conventional techniques cannot obtain an agglomerate in the first place, and even if an agglomerate is obtained, the agglomerate is problematic in that it lacks sufficient strength. In some cases, it is desirable to effectively utilize coal or heat-treated material (heat-treated coal) that has lost its liquid phase components with caking properties for some reason during the coal processing process.

Under these circumstances, in producing solid carbon materials, it is desirable to provide a method of producing a high-density, high-strength agglomerate mainly composed of carbon from coal, or a coal-derived high carbon concentration material, with poor caking properties.

It is an aim of the present disclosure to provide a method of producing a high-density, high-strength agglomerate mainly composed of carbon from coal, or a coal-derived high carbon concentration material, with poor caking properties.

### (Solution to Problem)

In order to achieve the aforementioned aim, the method of producing an agglomerate is as follows.
[1] A method of producing an agglomerate mainly composed of carbon, the method comprising:
   a grinding step of grinding first coal having a volatile matter of 1 mass% or more and less than 20 mass% on a dry basis to obtain a coal powder having a maximum particle size of 300 µm or less, the volatile matter and the particle size being measured according to the methods specified herein; and
   a hot pressing step of compacting the coal powder at a temperature included in a temperature range of 600 °C or more and 1250 °C or less in an oxygen-deprived environment to obtain an agglomerate.
[2] The method of producing an agglomerate mainly composed of carbon according to [1], wherein the first coal has a volatile matter of less than 13 mass% on a dry basis.
[3] The method of producing an agglomerate mainly composed of carbon according to [1] or [2], wherein the first coal is heat-treated coal that has been subjected to heat treatment.
[4] A method of producing an agglomerate mainly composed of carbon, the method comprising:
   a heat treatment step of subjecting second coal to heat treatment to obtain heat-treated coal having a volatile matter of 1 mass% or more and less than 20 mass% on a dry basis;
   a grinding step of grinding the heat-treated coal to obtain a coal powder having a maximum particle size of 300 µm or less, the volatile matter and the particle size being measured according to the methods specified herein; and
   a hot pressing step of compacting the coal powder at a temperature included in a temperature range of 600 °C or more and 1250 °C or less in an oxygen-deprived environment to obtain an agglomerate, wherein the heat-treated coal is used as the first coal in the grinding step.
[5] The method of producing an agglomerate mainly composed of carbon according to [4], wherein the heat-treated coal has a volatile matter of less than 13 mass% on a dry basis.
[6] The method of producing an agglomerate mainly composed of carbon according to any one of [3] to [5], wherein the heat treatment is performed at or below a first temperature of 500 °C or more and 1000 °C or less, and
   the compacting is performed at or above the first temperature.
[7] The method of producing an agglomerate mainly composed of carbon according to any one of [1] to [6], wherein a molding pressure of the compacting is 20 MPa or higher.
[8] The method of producing an agglomerate mainly composed of carbon according to any one of [1] to [7], wherein in the compacting, heating is started simultaneously with pressurization or after pressurization is started.
[9] The method of producing an agglomerate mainly composed of carbon according to any one of [1] to [8], wherein the first coal and/or the second coal is non-caking coal

### (Advantageous Effect)

According to the present disclosure, a method of producing a high-density, high-strength agglomerate mainly composed of carbon from coal, or a coal-derived high carbon concentration material, with poor caking properties can be provided.

### BRIEF DESCRIPTION OF THE DRAWINGS

In the accompanying drawings:
FIG. 1 is a graph illustrating the relationship between bulk density and volatile matter for agglomerates of Example 1;
FIG. 2 is a graph illustrating the relationship between indirect tensile strength and volatile matter for agglomerates of Example 1;
FIG. 3 is a graph illustrating the relationship between indirect tensile strength and heat treatment temperature for agglomerates of Example 2;
FIG. 4 is a graph illustrating the relationship between indirect tensile strength and molding pressure for agglomerates of Example 3; and
FIG. 5 is a graph illustrating the relationship between indirect tensile strength and the temperature at the lower limit of the molding temperature range for agglomerates of Example 5.

### DETAILED DESCRIPTION

With reference to the drawings, the method of producing an agglomerate mainly composed of carbon according to an embodiment of the present disclosure will be described.

### (First Embodiment)

A method of producing an agglomerate mainly composed of carbon according to the present embodiment includes a grinding step of grinding coal having a volatile matter of 1 mass% or more and less than 20 mass% on a dry basis (D.B.) to obtain a coal powder having a maximum particle size of 300 µm or less, and a hot pressing step of compacting the coal powder at a temperature included in a temperature range of 600 °C or more and 1250 °C or less in an oxygen-deprived environment to obtain an agglomerate. Hereinafter, the volatile matter of the coal is expressed as mass% on a dry basis.

With this production method, a high-density, high-strength agglomerate mainly composed of carbon can be produced from coal having a volatile matter of 1 mass% or more and less than 20 mass%, i.e., from coal, or a coal-derived high carbon concentration material, with poor caking properties.

In the following, the agglomerate mainly composed of carbon may be referred to simply as an agglomerate. The term "agglomerate mainly composed of carbon" means an agglomerate in which the carbon ratio in the agglomerate is 70 mass% or more and 100 mass% or less on a dry basis.

In greater detail, in this production method, the agglomerate is formed by a solid phase sintering-like phenomenon, instead of a liquid phase sintering-like phenomenon in which liquid phase components that can become volatile are used to bond or fuse coal powder particles together. Therefore, it is possible to obtain an agglomerate with high enough strength to withstand impact during transport and static loading when the agglomerate is formed into a packed bed and stored in a yard or hopper. It is also possible to obtain a high-density agglomerate (dense agglomerate) with a bulk density (apparent density) exceeding 1.1 g/cm³.

The bulk density of the agglomerate in the present embodiment is the value obtained by dividing the mass of the agglomerate by the external volume of the agglomerate (the sum of the volume of the solid portion and the volume of the open and closed pores of the target material). The mass of the agglomerate was measured by an electronic balance. The external volume of the mass is calculated by measuring the diameter and height of the cylindrical agglomerate with calipers.

The strength of the agglomerate in the present embodiment refers to the cold indirect tensile strength measured by the method described in NPL 1. Hereinafter, the indirect tensile strength measured by this method may be referred to simply as strength.

A strength of 1 MPa or higher is required as the strength high enough to withstand impact during transport and static loading when the agglomerate is formed into a packed bed and stored in a yard or hopper. In the following description, an agglomerate is evaluated as high strength (strong) in the case of having a strength of 1 MPa or higher. Among these, an agglomerate (i.e., coke) that is strong enough to be used in a conventional blast furnace process may be evaluated as being usable as a high-strength coke. Coke with a strength generally usable in a blast furnace process is defined as having a strength of 3 MPa or higher. In addition, in a comparison with conventional production methods, when comparing agglomerates produced using coal with approximately the same volatile matter, the agglomerate is evaluated as having high strength if the strength of the agglomerate is relatively high.

Examples of coal with a volatile matter of 1 mass% or more and less than 20 mass% are some bituminous coals, semi-anthracite, and anthracite. Coal with a volatile matter of 1 mass% or more and less than 20 mass% has poor caking properties. Coal with a volatile matter of 1 mass% or more and less than 20 mass% may be coal that has lost its volatile matter for some reason during coal processing or coal that has been heat treated. In other words, the concept of coal with a volatile matter of 1 mass% or more and less than 20 mass% in the present embodiment encompasses coal-derived materials mainly composed of carbon derived from coal, such as heat-treated coal, in addition to unprocessed coal. In the following description of the first embodiment, references made simply to coal shall mean coal with a volatile matter of 1 mass% or more and less than 20 mass%.

The volatile matter of coal is measured according to "Coal and coke - Methods for proximate analysis" (JIS M 8812:2004) specified in the Japanese Industrial Standards (JIS).

The grinding step is a process of grinding the coal to obtain a coal powder having a maximum particle size of 300 µm or less. The particle size in the present embodiment refers to the maximum particle diameter, unless otherwise stated. In the case of measuring with a particle size distribution measurement apparatus, the maximum particle size can be measured as follows.

In the present embodiment, the particle size and particle size distribution may be measured using commercially available particle size distribution measurement apparatuses. In the present embodiment, the "Morphologi 4" image-based particle size distribution measurement apparatus (hereinafter referred to simply as "particle size distribution measurement apparatus") manufactured by Malvern Panalytical is used to acquire images of 55,000 to 74,000 particles using a microscope built into the apparatus. The particle size and particle size distribution based on the circle equivalent particle size (projected area circle equivalent diameter), obtained by image interpretation using software provided with the apparatus, are used. That is, in a particle size distribution of the particles included in the mixed powder as measured by the particle size distribution measurement apparatus, the particle size equal to or greater than 95 % of the particles is defined as the maximum particle size (maximum value). Hereinafter, the simple mention of particle size, particle size distribution, or the like is to be understood as referring to the values measured by the aforementioned particle size distribution measurement apparatus.

In a case in which the coal powder contains coarse particles with a particle size greater than 300 µm, these coarse particles may remain in the agglomerate and reduce its strength. The solid phase sintering-like phenomenon that causes the bonding of particles in the coal powder during the subsequent hot pressing step is further promoted as the particle size is smaller. The residual coarse particles may therefore inhibit bonding between particles, resulting in a decrease in strength. Furthermore, defects easily form around the coarse particles in the agglomerate, which may cause stress concentration and become the starting point of fracture when an external force is applied, resulting in a decrease in strength.

The particle size of the coal powder is preferably 100 µm or less. The appropriately small particle size of the coal powder makes the physical structure in the agglomerate dense and homogeneous, which contributes to increased strength of the agglomerate. The finer the particle size of the coal powder, the better the strength of the agglomerate, and hence a finer particle size is preferred. The minimum particle size of coal powder is therefore not limited. However, when productivity is also taken into consideration in the case of reducing the particle size of the coal powder, setting the maximum particle size of the particles in the coal powder to less than 20 µm increases the cost of fine grinding while only achieving a limited improvement in the performance of the agglomerate. Therefore, a maximum particle diameter of 20 µm or more suffices to produce an agglomerate of sufficient strength.

No limitations are placed on the method or apparatus for fine grinding. A cutter mill, a hammer mill, a pin mill, a jet mill, a media mill such as a ball mill, or the like may be used as the apparatus for fine grinding coal. The apparatus for fine grinding is not limited to apparatuses that only perform fine grinding. For example, a grinder with a built-in classifier may be used.

The hot pressing step is a process of compacting the coal powder at a temperature included in a temperature range of 600 °C or more and 1250 °C or less in an oxygen-deprived environment to obtain an agglomerate.

In the hot pressing step, the coal powder is mechanically pressurized and molded, i.e., compacted. Mechanical pressurization refers to compressing coal powder with a pestle and mortar, a press mold (mold), or a member that serves as physical walls such as a compression roller. In the following, the pressure applied mechanically to the coal powder during the hot pressing step is referred to as the molding pressure.

In the hot pressing step, it suffices to be able to pressurize (i.e., hot press) the coal powder at a temperature included in a temperature range of 600 °C or more and 1250 °C or less. The hot pressing step may, for example, be for heating the coal powder to a temperature included in the above temperature range, stopping heating, and then compacting at a temperature included in the above temperature range. The hot pressing step may be for compacting at a temperature included in the above temperature range while the coal powder is heated to raise the temperature. In this case, the coal powder may be pressurized only during a portion of the entire process of heating and raising the temperature, or the coal powder may be pressurized during the entire process. From the perspective of controlling or preventing a temperature drop during compacting, the hot pressing step is preferably performed while heating at least to maintain the temperature, even if the temperature is not increased.

The hot pressing apparatus for compacting the coal powder at temperatures including the temperature range of 600 °C or more and 1250 °C or less is not particularly limited. The coal powder can be pressurized by storing the coal powder in a space enclosed by the aforementioned walls (for example, in a press mold for hot pressing) and pressurizing the coal powder by compression via the walls. The heat source for heating the coal powder may, for example, be electric resistance heating, microwave heating, or highfrequency induction heating.

When coal powder is heated, the coal powder undergoes thermal expansion. The bulk density of the packed bed of coal powder decreases accordingly. In contrast, heating the coal powder under pressure compresses the packed bed of coal powder in resistance to thermal expansion and prevents a decrease in the bulk density of the packed bed of coal powder. This increases the number of contact points between particles and promotes the solid phase sintering-like phenomenon. As a result, an agglomerate with high bulk density and high strength can be obtained more effectively.

Heating of the coal powder in the hot pressing step may be achieved via the aforementioned walls. The temperature range of the coal powder under pressure in the hot pressing step is referred to as the molding temperature range. In other words, during the process of raising the temperature of the coal powder, the molding temperature range is the temperature range from the temperature of the coal powder at the start of pressurization (the temperature at the lower limit of the molding temperature range) to the temperature of the coal powder at the end of pressurization (the temperature at the upper limit of the molding temperature range). The temperature at the upper limit of the molding temperature range is 1250 °C, the same as the upper limit temperature of the hot pressing step. The temperature at the lower limit of the molding temperature range is, for example, the temperature of the coal powder at the time it is charged into the press mold for hot pressing.

In the hot pressing step, the coal powder is heated to 600 °C or more in an atmosphere where the oxygen supply is cut off, thereby bonding and densifying the coal particles of the coal powder by a solid phase sintering-like phenomenon. As a result, an agglomerate with high bulk density and high strength can be produced. Note that solid phase sintering-like bonding of coal particles generally occurs (appears) at 600 °C or more.

The atmosphere in the hot pressing step in which the oxygen supply is cut off is, for example, an atmosphere in a space in which the inflow of air (oxygen) is inhibited and an inert gas such as nitrogen is passed through. In an oxygen-supplied environment, the raw material will burn and be lost.

The molding temperature range in the hot pressing step needs to include temperatures in the temperature range of 600 °C or more and 1250 °C or less. The molding temperature range preferably includes temperatures in a temperature range of 600 °C or more. The molding temperature range preferably includes temperatures in a temperature range of 1000 °C or less. In other words, part or all the molding temperature range needs to overlap with the temperature range of 600 °C or more and 1250 °C or less. This enables the solid phase sintering-like phenomenon to occur and agglomerate the coal powder. As described above, the solid phase sintering-like phenomenon occurs at 600 °C or more. The solid phase sintering-like phenomenon is particularly pronounced at 600 °C or more and 1250 °C or less. Since carbonization progresses, thus serving as a carbonization process, at the hot pressing step temperature of 600 °C or more and 1250 °C or less, a separate carbonization process is not necessarily required. Further carbonization may, however, be performed after the hot pressing step that also serves as a carbonization process.

In a case in which a carbonization process is performed after the hot pressing step, the carbonization process is performed in an atmosphere where the oxygen supply is cut off, as in the hot pressing step. The carbonization temperature, which is the temperature of the carbonization process, is preferably 600 °C or more. This is because the solid phase sintering-like phenomenon that causes bonding of particles in the coal powder occurs at 600 °C or more, as described above. On the other hand, a carbonization temperature exceeding 1250 °C leads to desorption and the like of hetero elements in the agglomerate, and the strength decreases. At carbonization temperatures of 1250 °C or less, the bulk density and strength of the agglomerate are higher as the carbonization temperature is higher. In the case of application to coke for a blast furnace, a high strength (3 MPa or higher, preferably 5 MPa or higher) is required for the agglomerate. Hence, the carbonization temperature is preferably 900 °C or more. The carbonization temperature is preferably 1,250 °C or less. The carbonization temperature is more preferably 1,100 °C or less. The carbonization temperature is preferably higher than the temperature of the hot pressing step. For example, in a case in which the hot pressing step is performed at 700 °C, performance of the carbonization process at a higher temperature than 700 °C can shrink the agglomerate and increase its density, further increasing its strength. In a case in which the hot pressing step also serves as the carbonization process, the maximum arrival temperature in the hot pressing step is the carbonization temperature.

In a case in which the coal powder is heated during compacting, the temperature at the lower limit of the molding temperature range is preferably as low as possible. In a case in which the coal powder is heated during compacting, the temperature at the upper limit of the molding temperature range is preferably as high as possible. This is because in the case of heating the coal powder while compacting, the reaction time can be lengthened if the molding temperature range is expanded. The temperature at the lower limit of the molding temperature range is the temperature at which pressurization begins in the hot pressing step (for example, room temperature). Part of the temperature range of the temperature raising process may be used as the molding temperature range, but to extend the molding temperature range, pressurization is preferably started simultaneously with or after starting to heat the coal powder, for example, when the heating is started or immediately after heating.

The heating rate is preferably 30 °C/min or less. By setting the heating rate to 30 °C/min or less, the temperature variation can be reduced and a localized reduction in strength can be avoided.

The higher the molding pressure, the more contact points between coal particles in the coal powder, which promotes the solid phase sintering-like phenomenon. Therefore, the higher the molding pressure, the higher the bulk density of the agglomerate, which in turn increases its strength.

When the molding pressure is 20 MPa or higher, the bulk density and strength of the agglomerate (i.e., the quality of the agglomerate) are stable. If the molding pressure is less than 20 MPa, a high-strength molding might not be obtained. Therefore, the molding pressure is preferably 20 MPa or higher. If the molding pressure is too high, the production cost may be high. A molding pressure of 300 MPa or less is sufficient.

If the volatile content of the coal powder serving as the raw material is less than 1 mass%, it may not be possible to obtain an agglomerate of appropriate bulk density or strength from the coal powder. The solid phase sintering-like phenomenon that occurs in the hot pressing step is thought to be driven by the aromatization or polycyclization reaction of the coal or heat-treated coal serving as raw material. In this reaction, hydrogen is released. In addition to this, CO, methane, and other hydrocarbons are released as a result of the decomposition of oxygen-containing functional groups and alkyl groups. In other words, the volatile matter of the raw material corresponds to the amount of hydrogen, CO, methane, and other hydrocarbons released during the aromatization or polycyclization reaction that drives the solid phase sintering-like phenomenon and indicates the potential for the solid phase sintering-like phenomenon. In other words, if the volatile matter is less than 1 mass%, the solid phase sintering-like phenomenon is unlikely to occur.

If the volatile matter is too high, such as over 20 mass%, the gas generated during heating (gas generated by the volatilization of the volatile matter or gas generated by the decomposition of the volatile content) will expand, or the coal powder will fuse and foam. Compression of the coal powder by the hot pressing apparatus during compacting is consequently inhibited, and the coal powder may not be pressurized sufficiently, resulting in a decrease in bulk density of the agglomerate. The gas generated during heating may also cause the internal pressure of the space enclosed by the walls of the mortar or press mold, for example, in the hot pressing apparatus to exceed the pressure that is intended to be applied to the coal powder. In such cases, there is a risk of damage to the hot pressing apparatus or the walls. The gas generated during heating also tends to stain the walls. Therefore, the volatile matter of the coal is set to less than 20 mass%.

In order to obtain an agglomerate with a strength of 3 MPa or higher, which is particularly suitable for coke for blast furnaces, the volatile matter of the coal is preferably 8 mass% or more. The higher the volatile content of the coal in the range of 1 mass% or more and less than 20 mass%, the higher the strength of the resulting agglomerate. By the volatile matter of the coal being set to 8 mass% or more and less than 20 mass%, a low-cost method of producing coke that is strong enough to be used in conventional blast furnace processes can be provided.

### (Second Embodiment)

In the case described in the first embodiment, the method of producing an agglomerate mainly composed of carbon includes a grinding step and a hot pressing step, and the grinding step is a process of grinding coal having a volatile matter of 1 mass% or more and less than 20 mass% to obtain a coal powder having a maximum particle size of 300 µm or less. Some bituminous coals, semi-anthracite, anthracite, and coal that has lost its volatile matter for some reason during coal processing or coal that has been heat treated were listed as examples of coal with a volatile matter of 1 mass% or more and less than 20 mass%. The present embodiment differs from the first embodiment in that the method of producing an agglomerate mainly composed of carbon further includes a heat treatment step of subjecting coal to heat treatment to obtain heat-treated coal with a volatile matter of 1 mass% or more and less than 20 mass%, and is otherwise similar to the first embodiment. In other words, as the method of producing an agglomerate mainly composed of carbon in the second embodiment, a heat treatment process is performed prior to the grinding process, and the heat-treated coal obtained in the heat treatment process is ground in the grinding process. In the following description, an explanation of parts similar to the first embodiment will be omitted as appropriate.

The heat treatment step is a process of obtaining heat-treated coal for the grinding process. In the heat treatment step, the coal is heated to 500 °C or more and 1000 °C or less in an oxygen-deprived environment, as described below.

The volatile matter of the coal to be heat treated in the heat treatment step (hereinafter referred to as raw coal) is, for example, 1 mass% or more and 45 mass% or less. Examples of coal with such volatile content are lignite, subbituminous coal, bituminous coal, semi-anthracite, and anthracite.

Raw coal with high volatile matter tends to have highly fluidity, whereas raw coal with low volatile content tends to have low fluidity. Thus, the fluidity differs depending on the amount of volatile content, but in the method of producing an agglomerate according to the present embodiment, the fluidity of the raw coal can be selected arbitrarily. For example, when highly fluid coking coal is used as the raw coal and heat-treated at 500 °C or more in an oxygen-deprived environment, the liquid phase components undergo thermal decomposition and polycondensation. Of the decomposed or polycondensed components, the light components evaporate while the heavy components solidify and remain. The coking coal loses its liquid phase components after the heat treatment and thus completely loses its fluidity. Therefore, coal exhibiting any fluidity can be used.

The raw coal in the present embodiment preferably has a common logarithm of maximum fluidity logMF (MF: Maximum Fluidity in JIS M8801) of 0.8 or more. When such raw coal is used, the bulk density of the agglomerate can in some cases be increased above the bulk density of an agglomerate produced by conventional techniques (for example, agglomerates produced by the method of NPL 2. When the log MF of the raw coal is 0.8 or more, foaming due to volatile matter generated in the liquid phase becomes significant, and the bulk density of the agglomerates tends to decrease as the log MF increases).

Heat treatment of raw coal is performed by heating the coal to 500 °C or more and 1000 °C or less in an oxygen-deprived environment, as described above.

The lower the heat treatment temperature, the higher the residual volatile matter in the heat-treated coal, and therefore the more pronounced the solid phase sintering-like phenomenon is in the hot pressing step. As a result, an agglomerate with high bulk density and high strength can be obtained.

If the heat treatment temperature is below 500 °C, excessive volatile matter and tar will remain in the heat-treated coal and coal powder. For example, if the volatile matter of the heat-treated coal exceeds 20 mass%, this could, as described in the first embodiment, cause a decrease in bulk density due to fusing, foaming, or expansion of the coal powder in the hot pressing step, or damage or staining of the hot pressing apparatus or the like, which is not desirable.

If the heat treatment temperature exceeds 1000 °C, the residual volatile matter in the heat-treated coal and coal powder may be less than 1 mass%. In this case, the solid phase sintering-like phenomenon is less likely to occur, as described in the first embodiment.

The heat treatment of the raw coal is preferably performed in an atmosphere where the oxygen supply is cut off. The heat treatment of the raw coal may, for example, be performed with the raw coal contained in a container that forms a space where air is blocked from entering and inert gas is allowed to flow through. The heat treatment of the raw coal may be performed by heating a container containing the raw coal and transferring heat from the container. In other words, the heat treatment of the raw coal may be performed by heating a container in which the raw coal is housed, thereby heating the raw coal to 500 °C or more and 1000 °C or less.

The reaction rate of the pyrolysis reaction of raw coal during heat treatment is usually fast, so the time required for the pyrolysis reaction in the heat treatment to be completed is short. Therefore, the treatment time required for heat treatment is 1 min or more. The time for heat treatment (processing time of heat treatment, hereinafter referred to as heat treatment time) is preferably 10 min or more. This eliminates the temperature difference between the temperature of the raw coal and the temperature of the container and allows for homogeneous heat treatment of the entire raw coal. This also enables the heat treatment to be performed with the temperature of the entire raw coal reliably raised to an even heat treatment temperature (i.e., heated evenly), thereby suppressing variation in the quality of the heat-treated coal.

No upper limit is placed on the heat treatment time, but if the heat treatment time is too long, the energy required for heat treatment increases, which leads to an undesired increase in costs. A heat treatment time of 60 min or less is usually sufficient. The heat treatment time is the length of time during which the temperature of the raw coal is maintained at a predetermined heat treatment temperature (hereinafter referred to as a first temperature) of 500 °C or more and 1000 °C or less from the point in time at which the temperature of the raw coal reaches this first temperature.

The heat treatment can be performed using a heating apparatus such as an electric furnace, rotary kiln, fluidized bed heating furnace, screw-type heating furnace, shaft furnace, or pyrolysis furnace.

The hot pressing step is the same as in the first embodiment, but the following improvements may be further implemented.

As described above, in the present embodiment, the raw coal is heat treated at the first temperature in the heat treatment step to obtain heat-treated coal. In other words, the pyrolysis reaction that can occur at or below the first temperature is complete in heat-treated coal, and no further pyrolysis reaction will occur unless the heat-treated coal is heated to a temperature at or above the first temperature. Accordingly, the coal powder needs to be heated to a temperature at or above the first temperature in order to initiate the pyrolysis reaction that drives the solid phase sintering-like phenomenon. In the hot pressing step, the molding temperature range is therefore preferably equal to or greater than the first temperature.

### (First Variation)

In the above embodiment, the coal ground in the grinding step is coal with a volatile matter of 1 mass% or more and less than 20 mass%, and some bituminous coals, semi-anthracite, anthracite, and coal that has lost its volatile content for some reason during coal processing or coal that has been heat treated were listed as examples of coal with a volatile matter of 1 mass% or more and less than 20 mass%. In the second embodiment, it was then explained that in the case of performing the heat treatment step at or below the first temperature, the carbonization temperature at the time of heat molding in the hot pressing step is preferably equal to or greater than the first temperature. However, in the case of producing an agglomerate using coal that has lost its volatile matter for some reason in the coal processing process, such as coal that has unintentionally undergone heat treatment similar to the heat treatment step, the first temperature at which the coal was heat treated may be unknown.

If the first temperature at which the coal was heat treated is thus unknown, the first temperature at which the coal was heat treated may be estimated using, for example, the method of estimating thermal hysteresis of coal or coke as disclosed in PTL 2, and the molding temperature range in the hot pressing step may be determined based on this estimated first temperature.

### (Second Variation)

In the above embodiment, the case of performing processes up to and including the hot pressing step to obtain an agglomerate was described. The agglomerate obtained in the hot pressing step can be further processed into graphite material by a graphitization process. In the case of producing graphite material from the agglomerate, it suffices to heat the agglomerate in an oxygen-deprived atmosphere, preferably at 2000 °C or more and even more preferably at 2200 °C or more, as the graphitization process after the hot pressing step.

### EXAMPLES

### Examples are described below.

### (Example 1)

As Example 1, raw coal or heat-treated coal of various volatile contents was used to produce agglomerates by the production method according to the present embodiment, and the agglomerates were evaluated.

Various raw coals were pre-ground to a particle size of 74 µm or less (200 mesh pass) and heat treated at different heat treatment temperatures in a range of 600 °C or more and 900 °C or less to obtain heat-treated coal (heat treatment step). In the case of coking coal with high volatile matter (for example, the case of the raw coal being coking coal), the heat treatment may cause agglomeration. Therefore, in this Example, the heat-treated coal produced from each of the raw coals was ground to a particle size of 74 µm or less after the heat treatment to obtain coal powder (grinding step). A portion of the raw coal (with a volatile matter of less than 20 mass%) was not subjected to heat treatment, but was instead ground directly to yield coal powder. An ultra centrifugal grinder (manufacturer: Verder Scientific, model: ZM200) was used for both of the above grinding processes.

The coal powder was further subjected to hot pressing (hot pressing step). First, a mold (press mold, diameter: 12 mm) was filled with 1.32 g of coal powder. The coal powder was then heated at a heating rate of 20 °C/min, starting from room temperature until reaching 1000 °C, while applying a molding pressure (mechanical pressure) of 50 MPa under a nitrogen flow. After reaching 1000 °C, the mold was further held at 1000 °C for 5 min. The temperature was then lowered and agglomerates (1-1 to 1-15) according to Example 1 were recovered.

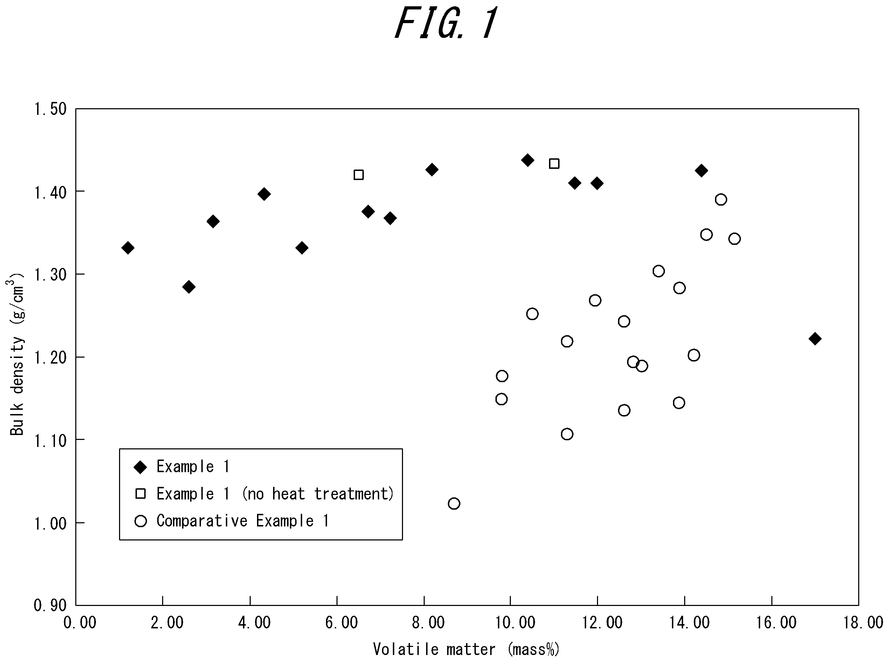

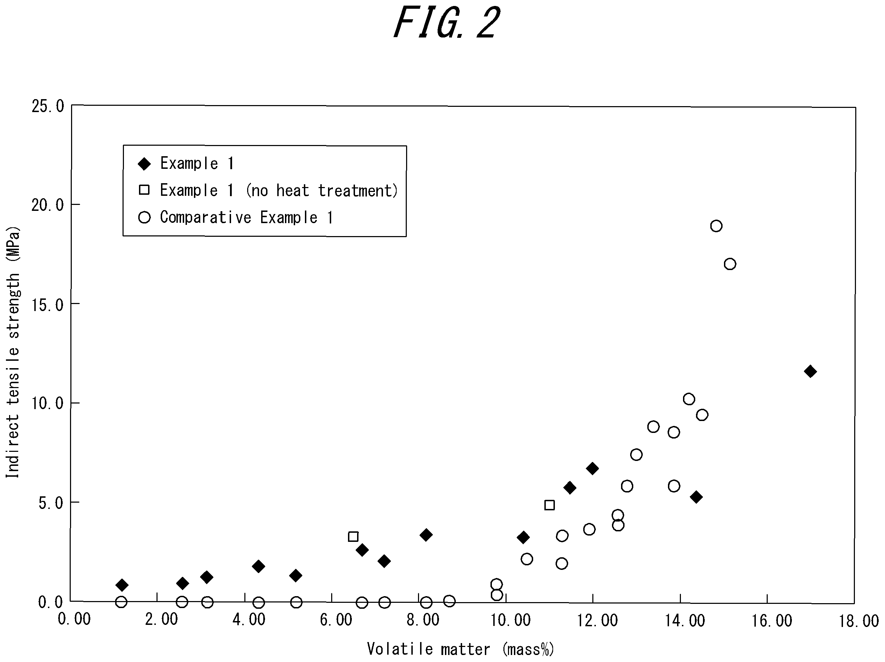

The bulk density and indirect tensile strength were measured for the above agglomerates. The indirect tensile strength was measured as the cold indirect tensile strength measured using the method described in NPL 1. The bulk density, as described above, is calculated from the dimensions of the external volume measured by calipers and the mass measured by an electronic balance. Table 1 lists the heat treatment temperature of the coal used to produce each agglomerate in Example 1, the volatile matter after heat treatment, and the bulk density and indirect tensile strength of the agglomerate. FIG. 1 is a graph illustrating the relationship between bulk density and volatile matter for the agglomerates of Example 1. FIG. 2 is a graph illustrating the relationship between indirect tensile strength and volatile content for the agglomerates of Example 1.

### [Table 1]

**Table 1**

| Agglomerate | Heat treatment temperature (°C) | Volatile matter (mass%) | Bulk density (g/cm³) | Indirect tensile strength (MPa) |
|---|---|---|---|---|
| 1-1 | 900 | 1.2 | 1.33 | 0.9 |
| 1-2 | 900 | 2.6 | 1.29 | 1.0 |
| 1-3 | 800 | 3.2 | 1.36 | 1.2 |
| 1-4 | 700 | 4.3 | 1.40 | 1.8 |
| 1-5 | 800 | 5.2 | 1.33 | 1.4 |
| 1-6 | 600 | 6.7 | 1.38 | 2.7 |
| 1-7 | 700 | 7.2 | 1.37 | 2.1 |
| 1-8 | 600 | 8.2 | 1.43 | 3.4 |
| 1-9 | 600 | 10.4 | 1.44 | 3.3 |
| 1-10 | 600 | 11.5 | 1.41 | 5.9 |
| 1-11 | 600 | 12.0 | 1.41 | 6.8 |
| 1-12 | 600 | 14.4 | 1.43 | 5.4 |
| 1-13 | 600 | 17.0 | 1.22 | 11.7 |
| 1-14 | no heat treatment | 11.0 | 1.43 | 5.0 |
| 1-15 | no heat treatment | 6.5 | 1.42 | 3.4 |

### (Comparative Example 1)

As Comparative Example 1, coking coal or heat-treated coal with various volatile matters was used to produce agglomerates by the method of producing coke (conventional method) described in NPL 2, and the agglomerates were evaluated.

A mold (press mold, diameter: 12 mm) was filled with 1.50 g of coal powder obtained in the same way as in Example 1. A mechanical pressure of 100 MPa was then applied to obtain the molding. Next, the molding was heated at a heating rate of 3 °C/min until the inside of the electric furnace reached 1000 °C. After reaching 1000 °C, the inside of the electric furnace was further held at 1000 °C for 5 min. The temperature was then lowered and agglomerates (1-1 to 1-26) according to Comparative Example 1 were recovered.

The bulk density and indirect tensile strength were measured for the above agglomerates, as in Example 1. Table 2 lists the heat treatment temperature of the coal used to produce each agglomerate in Comparative Example 1, the volatile matter after heat treatment, and the bulk density and indirect tensile strength of the agglomerate. In addition to the results of Example 1, FIG. 1 includes a graph illustrating the relationship between bulk density and volatile matter of the agglomerates in Comparative Example 1. In addition to the results of Example 1, FIG. 2 similarly includes a graph illustrating the relationship between indirect tensile strength and volatile matter of the agglomerates in Comparative Example 1.

### [Table 2]

**Table 2**

| Agglomerate | Heat treatment temperature (°C) | Volatile matter (mass%) | Bulk density (g/cm³) | Indirect tensile strength (MPa) |
|---|---|---|---|---|
| R1-1 | 900 | 1.2 | no agglomeration | 0.0 |
| R1-2 | 900 | 2.6 | no agglomeration | 0.0 |
| R1-3 | 800 | 3.2 | no agglomeration | 0.0 |
| R1-4 | 700 | 4.3 | no agglomeration | 0.0 |
| R1-5 | 800 | 5.2 | no agglomeration | 0.0 |
| R1-6 | 600 | 6.7 | no agglomeration | 0.0 |
| R1-7 | 700 | 7.2 | no agglomeration | 0.0 |
| R1-8 | 600 | 8.2 | no agglomeration | 0.0 |
| R1-9 | 600 | 8.7 | 1.02 | 0.1 |
| R1-10 | 600 | 9.8 | 1.15 | 0.5 |
| R1-11 | 600 | 9.8 | 1.18 | 0.9 |
| R1-12 | 600 | 10.5 | 1.25 | 2.2 |
| R1-13 | 600 | 11.3 | 1.22 | 2.0 |
| R1-14 | 600 | 11.3 | 1.11 | 3.4 |
| R1-15 | 600 | 11.9 | 1.27 | 3.7 |
| R1-16 | 600 | 12.6 | 1.24 | 4.0 |
| R1-17 | 600 | 12.6 | 1.14 | 4.5 |
| R1-18 | 600 | 12.8 | 1.19 | 5.9 |
| R1-19 | 600 | 13.0 | 1.19 | 7.5 |
| R1-20 | 600 | 13.4 | 1.30 | 8.9 |
| R1-21 | 600 | 13.9 | 1.28 | 8.6 |
| R1-22 | 600 | 13.9 | 1.15 | 5.9 |
| R1-23 | 600 | 14.2 | 1.20 | 10.3 |
| R1-24 | 600 | 14.5 | 1.35 | 9.5 |
| R1-25 | 600 | 14.8 | 1.39 | 19.1 |
| R1-26 | 600 | 15.1 | 1.34 | 17.2 |

The results of Example 1 and Comparative Example 2 illustrated in Tables 1 and 2 and FIGS. 1 and 2 indicate that the agglomerate of Example 1 produced using coal or heat-treated coal with a volatile matter of less than 13 mass% has higher bulk density and strength than the agglomerate of Comparative Example 1 produced using a conventional method.

Each agglomerate according to Example 1 is high density, with a bulk density of 1.1 g/cm³ or more.

In particular, when the volatile matter is less than 9 mass%, agglomeration was not achieved in Comparative Example 1 but was achieved in Example 1. In other words, the bulk density and strength of the agglomerates of Example 1 are higher than those of the agglomerates of Comparative Example 1.

At a volatile matter of 8 mass% or more, the agglomerates of Example 1 achieve a strength allowing use as high-strength coke.

At a volatile content of 13 mass% or more, the bulk density and strength of the agglomerates of Example 1 were high values comparable to those of the agglomerate of Comparative Example 1.

Thus, from the results of Example 1 illustrated in FIGS. 1 and 2, it can be sufficiently inferred that the method for producing an agglomerate according to the present embodiment can produce agglomerates using coal or heat-treated coal having a volatile matter of at least less than 20 mass%.

The above results indicate that, according to the method of producing an agglomerate according to the present embodiment, a high-density, high-strength agglomerate mainly composed of carbon can be produced from coal, or a coal-derived high carbon concentration material (e.g., heat-treated coal), with poor caking properties, i.e., with a volatile matter of 1 mass% or more and less than 20 mass%.

### (Example 2)

In order to confirm the effect of the heat treatment temperature, agglomerates according to Example 2 were produced and evaluated as follows.

In Example 2, agglomerates were produced using coal at different heat treatment temperatures, and the bulk density and indirect tensile strength were measured. Coal (1) (volatile matter: 10.0 mass%), a non-caking coal, and coal (2) (volatile content: 20.0 mass%), a non-caking coal, were used as the raw coal.

The production of the agglomerates in Example 2 was carried out in the same manner as in Example 1, except that the heat treatment was performed by varying the heat treatment temperature within a range of 600 °C or more and 1100 °C or less to obtain heat-treated coal. Agglomerates (2-1 to 2-12) according to Example 2 were obtained.

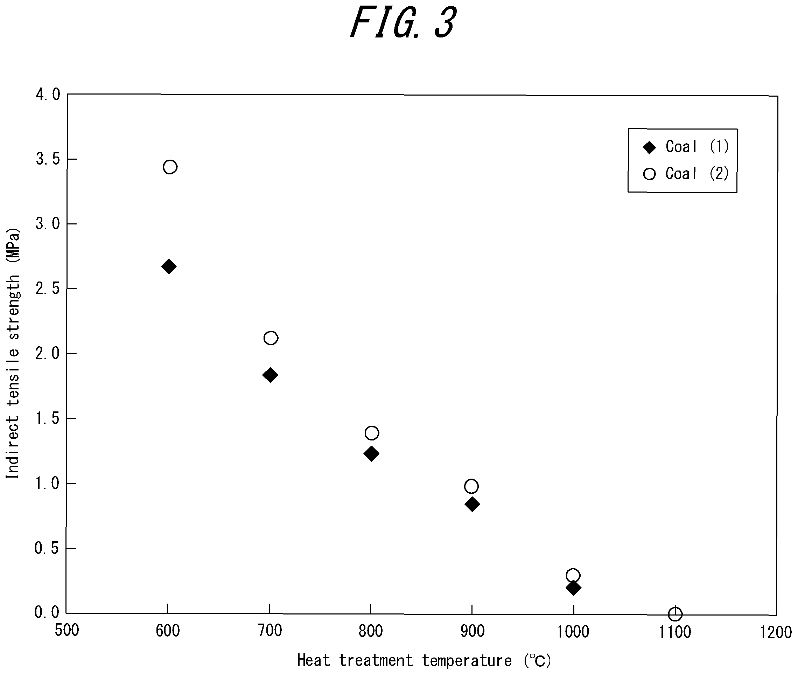

The bulk density and indirect tensile strength were measured for the agglomerates of Example 2, as in Example 1. Table 3 lists the type of coal used to produce each agglomerate in Example 2, the heat treatment temperature, the volatile matter after heat treatment, and the bulk density and indirect tensile strength of the agglomerate. FIG. 3 is a graph illustrating the relationship between indirect tensile strength and heat treatment temperature for the agglomerates of Example 2.

### [Table 3]

**Table 3**

| Raw coal | Agglomerate | Heat treatment temperature (°C) | Volatile matter (mass%) | Bulk density (g/cm³) | Indirect tensile strength (MPa) |
|---|---|---|---|---|---|
| Coal (1) | 2-1 | 600 | 8.2 | 1.43 | 3.4 |
| | 2-2 | 700 | 7.2 | 1.37 | 2.1 |
| | 2-3 | 800 | 5.2 | 1.33 | 1.4 |
| | 2-4 | 900 | 2.6 | 1.29 | 1.0 |
| | 2-5 | 1000 | 1.4 | 1.22 | 0.3 |
| | 2-6 | 1100 | 0.7 | no agglomeration | 0.0 |
| Coal (2) | 2-7 | 600 | 6.7 | 1.38 | 2.7 |
| | 2-8 | 700 | 4.3 | 1.40 | 1.8 |
| | 2-9 | 800 | 3.2 | 1.36 | 1.2 |
| | 2-10 | 900 | 1.2 | 1.33 | 0.9 |
| | 2-11 | 1000 | 1.0 | 1.32 | 0.2 |
| | 2-12 | 1100 | 0.5 | no agglomeration | 0.0 |

It is clear from Table 3 and FIG. 3 that the volatile matter decreases monotonically as the heat treatment temperature increases, and the strength of the agglomerate accordingly decreases monotonically. In particular, when the heat treatment temperature is 900 °C or more, an agglomerate is obtained, but the strength is greatly reduced. For example, in agglomerates 2-5, 2-10, and 2-11, the strength is below 1.0 MPa. Furthermore, at a heat treatment temperature of 1100 °C, the volatile content was less than 1 mass%, and no agglomerate was obtained. At a heat treatment temperature of 800 °C or less, the agglomerate has high density and high strength. Even when the heat treatment temperature exceeds 800 °C and reaches 900 °C or more, heat-treated coal with volatile matter not even allowing agglomeration by conventional techniques (see the case of a volatile content of less than 9 mass% in Comparative Example 1) can be formed into an agglomerate with a measurable strength, indicating that agglomerates with higher strength than agglomerates produced by conventional techniques can be obtained. Since the bulk density and strength of agglomerates also depend on the amount of volatile matter in the heat-treated coal after heat treatment, it is not the case that a heat treatment temperature exceeding 1000 °C immediately makes it impossible to produce a high-density, high-strength agglomerate. However, regardless of the type of coal subjected to heat treatment, the amount of volatile matter monotonically decreases as the heat treatment temperature increases, and at temperatures above 1000 °C, the amount of volatile matter generally approaches or becomes less than 1 mass%. Therefore, a heat treatment temperature of 1000 °C or less is considered preferrable.

### (Example 3)

In order to confirm the effect of molding pressure, agglomerates according to Example 3 were produced and evaluated as follows.

The production of the agglomerates in Example 3 was carried out in the same manner as in Example 1, except that coal (1) was used as the raw coal, the heat treatment was performed only at a heat treatment temperature of 600 °C to obtain heat-treated coal, and the molding pressures were 10 MPa, 20 MPa, 35 MPa, and 50 MPa. Agglomerates (3-1 to 3-4) according to Example 3 were obtained.

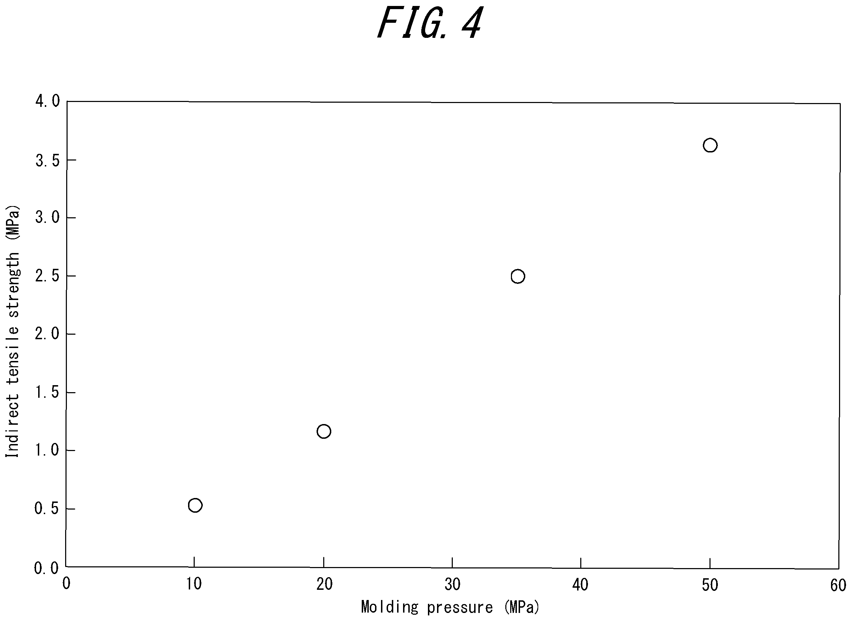

The bulk density and indirect tensile strength were measured for the agglomerates of Example 3, as in Example 1. Table 4 lists the molding pressure at the time of production of each agglomerate in Example 3, along with the bulk density and the indirect tensile strength of the agglomerate. FIG. 4 is a graph illustrating the relationship between indirect tensile strength and molding pressure for the agglomerates in Example 3. The heat-treated coal (coal (1) after heat treatment) in Example 3 had a volatile matter of 8.2 mass%.

### [Table 4]

**Table 4**

| Agglomerate | Molding pressure (MPa) | Bulk density (g/cm³) | Indirect tensile strength (MPa) |
|---|---|---|---|
| 3-1 | 10 | 1.14 | 0.5 |
| 3-2 | 20 | 1.24 | 1.2 |
| 3-3 | 35 | 1.34 | 2.5 |
| 3-4 | 50 | 1.42 | 3.6 |

From Table 4 and the graphs illustrated in FIG. 4, it can be seen that the molding pressure is preferably 20 MPa or higher. If the molding pressure is 20 MPa or higher, the agglomerate has high density and high strength. If the molding pressure is less than 20 MPa (10 MPa), an agglomerate is obtained, but the strength is below 1.0 MPa.

### (Example 4)

In order to confirm the effect of the molding temperature range, agglomerates according to Example 4 were produced and evaluated as follows.

The production of the agglomerates in Example 4 was carried out in the same manner as in Example 1, except that coal (1) was used as the raw coal, the heat treatment was performed only at a heat treatment temperature of 600 °C to obtain heat-treated coal, and in the hot pressing step, molding pressure was applied within a molding temperature range of only a specific temperature range of 200 °C between room temperature and 1000 °C during the temperature raising process. Agglomerates (4-1 to 4-5) according to Example 4 were obtained.

The bulk density and indirect tensile strength were measured for the agglomerates of Example 4, as in Example 1. Table 5 lists the molding temperature range, along with the bulk density and the indirect tensile strength of the agglomerates, in Example 4. The heat-treated coal (coal (1) after heat treatment) in Example 4 had a volatile matter of 8.2 mass%, as indicated in Example 3.

### [Table 5]

**Table 5**

| Agglomerate | Molding temperature range (°C) | Bulk density (g/cm³) | Indirect tensile strength (MPa) |
|---|---|---|---|
| 4-1 | Room temperature to 200 | no agglomeration | |
| 4-2 | 200 to 400 | no agglomeration | |
| 4-3 | 400 to 600 | no agglomeration | |
| 4-4 | 600 to 800 | 1.30 | 1.3 |
| 4-5 | 800 to 1000 | 1.30 | 1.8 |

As illustrated in Table 5, it is clear that in a case in which the molding temperature range does not include a temperature range of 600 °C or higher, no agglomerate can be obtained. It is also clear that in a case in which the molding temperature range includes temperatures in the temperature range of 600 °C or more and 1000 °C or less (the case in which compacting is performed at a temperature in the temperature range of 600 °C or more and 1000 °C or less), a high-density, high-strength agglomerate is obtained.

### (Example 5)

In order to confirm the effect of the molding temperature range, agglomerates according to Example 5 were produced and evaluated as follows.

The production of the agglomerates in Example 5 was carried out in the same manner as in Example 4, except that in the hot pressing step, the temperature at the lower limit of the molding temperature range was set to 25 °C, 200 °C, 400 °C, 600 °C, and 800 °C, and the temperature at the upper limit of the molding temperature range was set to 1000 °C (i.e., only the temperature at the lower limit of the molding temperature range was changed), and molding pressure was applied. Agglomerates (5-1 to 5-5) according to Example 5 were obtained.

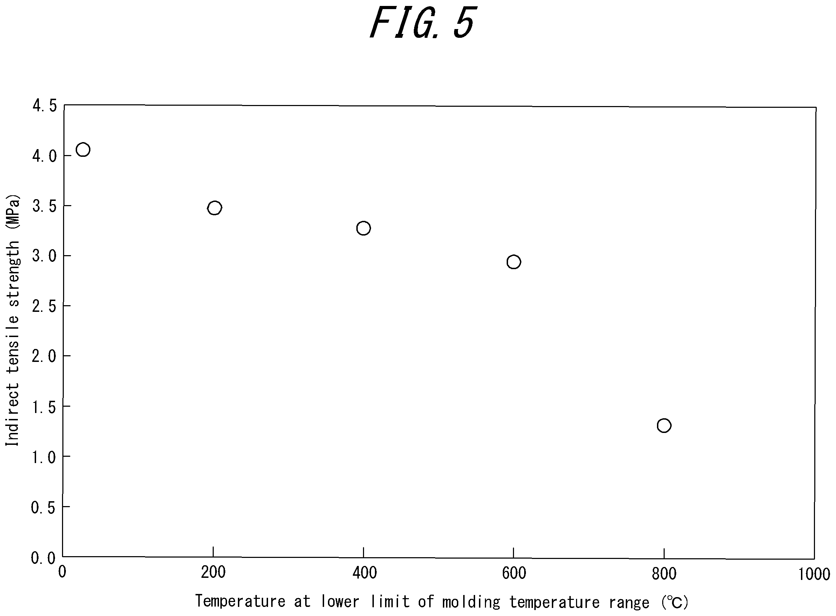

The bulk density and indirect tensile strength were measured for the agglomerates of Example 5, as in Example 1. Table 6 lists the temperature at the lower limit of the molding temperature range, along with the bulk density and the indirect tensile strength of the agglomerates, in Example 5. FIG. 5 is a graph illustrating the relationship between indirect tensile strength and the temperature at the lower limit of the molding temperature range for agglomerates of Example 5.

### [Table 6]

**Table 6**

| Agglomerate | Temperature at lower limit of molding temperature range | Bulk density (g/cm³) | Indirect tensile strength (MPa) |
|---|---|---|---|
| 5-1 | 25 | 1.39 | 4.1 |
| 5-2 | 200 | 1.39 | 3.5 |
| 5-3 | 400 | 1.38 | 3.3 |
| 5-4 | 600 | 1.37 | 3.0 |
| 5-5 | 800 | 1.30 | 1.3 |

As illustrated in Table 6 and FIG. 5, the strength of the agglomerate increases as the temperature at the lower limit decreases. Therefore, it can be concluded that the lower limit of the molding temperature range is preferably low in order to increase the strength of the agglomerate. It is also clear from Table 6 that the density of the agglomerate increases as the temperature at the lower limit decreases. Therefore, it can be concluded that the lower limit of the molding temperature range is preferably low in order to increase the density of the agglomerate.

Overall, the following is clear from the results illustrated in Tables 5 and 6. In a case in which the molding temperature range includes temperatures in the temperature range of 600 °C or more and 1000 °C or less (the case in which compacting is performed at a temperature in the temperature range of 600 °C or more and 1000 °C or less), a high-density, high-strength agglomerate is obtained. Furthermore, the molding temperature range preferably includes a temperature range of less than 600 °C, as this may further improve the bulk density or strength of the agglomerate. In other words, part of the molding temperature range preferably overlaps with the temperature range of room temperature (25 °C) or more to less than 600 °C. In a particularly preferred specific example, the molding pressure is continuously applied from the start to the end of heating in the hot pressing, as with the agglomerate 5-1.

In this way, a method of producing a high-density, high-strength agglomerate mainly composed of carbon from coal, or a coal-derived high carbon concentration material, with poor caking properties can be provided. The agglomerate produced by this production method can, for example, be strong enough to withstand impact during transport and static loading when the agglomerate is formed into a packed layer and stored in a yard or hopper, or it can be strong enough to be used in a conventional blast furnace process.

The configurations disclosed in the above embodiments (including other embodiments; the same applies below) can be applied in combination with the configurations disclosed in other embodiments, as long as no contradiction arises. Furthermore, the embodiments disclosed in the present specification are examples; the embodiments of the present disclosure are not limited thereto and may be modified as appropriate within a scope that does not depart from the purpose of the present disclosure.

### INDUSTRIAL APPLICABILITY

The present disclosure can be applied to a method of producing an agglomerate mainly composed of carbon.

## Claims

1. A method of producing an agglomerate mainly composed of carbon, the method comprising:
a grinding step of grinding first coal having a volatile matter of 1 mass% or more and less than 20 mass% on a dry basis to obtain a coal powder having a maximum particle size of 300 µm or less, the volatile matter of the first coal being measured according to "Coal and coke - Methods for proximate analysis" (JIS M 8812:2004) specified in the Japanese Industrial Standards (JIS), and the particle size being measured using the "Morphologi 4" image-based particle size distribution measurement apparatus manufactured by Malvern Panalytical, as described in the description; and
a hot pressing step of compacting the coal powder at a temperature included in a temperature range of 600 °C or more and 1250 °C or less in an oxygen-deprived environment to obtain an agglomerate.

2. The method of producing an agglomerate mainly composed of carbon according to claim 1, wherein the first coal has a volatile matter of less than 13 mass% on a dry basis.

3. The method of producing an agglomerate mainly composed of carbon according to claim 1, wherein the first coal is heat-treated coal that has been subjected to heat treatment.

4. The method of producing an agglomerate mainly composed of carbon according to claim 1, the method further comprising:
a heat treatment step of subjecting second coal to heat treatment to obtain heat-treated coal having a volatile matter of 1 mass% or more and less than 20 mass% on a dry basis, the volatile matter of the second coal being measured according to "Coal and coke - Methods for proximate analysis" (JIS M 8812:2004) specified in the Japanese Industrial Standards (JIS), as described in the description,
wherein the heat-treated coal is used as the first coal in the grinding step.

5. The method of producing an agglomerate mainly composed of carbon according to claim 4, wherein the heat-treated coal has a volatile matter of less than 13 mass% on a dry basis.

6. The method of producing an agglomerate mainly composed of carbon according to claim 4 or 5, wherein the second coal is non-caking coal.

7. The method of producing an agglomerate mainly composed of carbon according to any one of claims 3 to 6, wherein the heat treatment is performed at or below a first temperature of 500 °C or more and 1000 °C or less, and
the compacting is performed at or above the first temperature.

8. The method of producing an agglomerate mainly composed of carbon according to any one of claims 1 to 7, wherein a molding pressure of the compacting is 20 MPa or higher.

9. The method of producing an agglomerate mainly composed of carbon according to any one of claims 1 to 8, wherein in the compacting, heating is started simultaneously with pressurization or after pressurization is started.

10. The method of producing an agglomerate mainly composed of carbon according to any one of claims 1 to 9, wherein the first coal is non-caking coal.

## Patentansprüche

1. Verfahren zur Herstellung eines hauptsächlich aus Kohlenstoff zusammengesetzten Agglomerats, wobei das Verfahren umfasst:
einen Mahlschritt zum Vermahlen einer ersten Kohle, die 1 Masse-% oder mehr und weniger als 20 Masse-% auf Trockenbasis an flüchtigen Bestandteile aufweist, um ein Kohlepulver mit einer maximalen Partikelgröße von 300 µm oder weniger zu erhalten, wobei die flüchtigen Bestandteile der ersten Kohle gemäß "Kohle und Koks - Verfahren zur Immediatanalyse" (JIS M 8812:2004), angegeben in den japanischen Industriestandards (JIS), gemessen werden und die Partikelgröße unter Verwendung des bildbasierten Partikelgrößenverteilungsmessgeräts "Morphologi 4", hergestellt von Malvern Panalytical wie in der Beschreibung beschrieben gemessen wird, und
einen Heißpressschritt zum Verdichten des Kohlenpulvers bei einer Temperatur, die in einem Temperaturbereich von 600°C oder mehr und 1.250°C oder weniger eingeschlossen ist, in einer sauerstoffarmen Umgebung, um ein Agglomerat zu erhalten.

2. Verfahren zur Herstellung eines hauptsächlich aus Kohlenstoff zusammengesetzten Agglomerats gemäß Anspruch 1, wobei die erste Kohle weniger als 13 Masse-% auf Trockenbasis an flüchtigen Bestandteilen aufweist.

3. Verfahren zur Herstellung eines hauptsächlich aus Kohlenstoff zusammengesetzten Agglomerats gemäß Anspruch 1, wobei die erste Kohle wärmebehandelte Kohle ist, die einer Wärmebehandlung unterzogen wurde.

4. Verfahren zur Herstellung eines hauptsächlich aus Kohlenstoff zusammengesetzten Agglomerats gemäß Anspruch 1, wobei das Verfahren ferner umfasst:
einen Wärmebehandlungsschritt zum Unterziehen einer zweiten Kohle einer Wärmebehandlung, um wärmebehandelte Kohle zu erhalten, die 1 Masse-% oder mehr und weniger als 20 Masse-% auf Trockenbasis an flüchtigen Bestandteilen aufweist, wobei die flüchtigen Bestandteile der zweiten Kohle gemäß "Kohle und Koks - Verfahren zur Immediatanalyse" (JIS M 8812:2004), angegeben in den japanischen Industriestandards (JIS), wie in der Beschreibung beschrieben gemessen werden,
wobei die wärmebehandelte Kohle als die erste Kohle in dem Mahlschritt verwendet wird.

5. Verfahren zur Herstellung eines hauptsächlich aus Kohlenstoff zusammengesetzten Agglomerats gemäß Anspruch 4, wobei die wärmebehandelte Kohle weniger als 13 Masse-% auf Trockenbasis an flüchtigen Bestandteilen aufweist.

6. Verfahren zur Herstellung eines hauptsächlich aus Kohlenstoff zusammengesetzten Agglomerats gemäß Anspruch 4 oder 5, wobei die zweite Kohle eine nicht-backende Kohle ist.

7. Verfahren zur Herstellung eines hauptsächlich aus Kohlenstoff zusammengesetzten Agglomerats gemäß einem der Ansprüche 3 bis 6, wobei die Wärmebehandlung bei oder unterhalb einer ersten Temperatur von 500°C oder mehr und 1.000°C oder weniger durchgeführt wird und das Verdichten bei oder oberhalb der ersten Temperatur durchgeführt wird.

8. Verfahren zur Herstellung eines hauptsächlich aus Kohlenstoff zusammengesetzten Agglomerats gemäß einem der Ansprüche 1 bis 7, wobei ein Formdruck für das Verdichten 20 MPa oder höher ist.

9. Verfahren zur Herstellung eines hauptsächlich aus Kohlenstoff zusammengesetzten Agglomerats gemäß einem der Ansprüche 1 bis 8, wobei beim Verdichten eine Erwärmung gleichzeitig mit einer Druckbeaufschlagung oder nach einer Druckbeaufschlagung begonnen wird.

10. Verfahren zur Herstellung eines hauptsächlich aus Kohlenstoff zusammengesetzten Agglomerats gemäß einem der Ansprüche 1 bis 9, wobei die erste Kohle eine nicht-backende Kohle ist.

## Revendications

1. Procédé de production d'un agglomérat principalement composé de carbone, le procédé comprenant :
une étape de broyage consistant à broyer un premier charbon présentant des matières volatiles à raison de 1 % en masse ou plus et de moins de 20 % en masse sur une base sèche pour obtenir une poudre de charbon présentant une taille maximale de particule de 300 µm ou moins, les matières volatiles du premier charbon étant mesurées selon « Coal and coke - Methods for proximate analysis » (JIS M 8812:2004) spécifié dans les normes industrielles japonaises (JIS), et la taille de particule étant mesurée en utilisant l'appareil de mesure de distribution de taille de particule par imagerie « Morphologi 4 » fabriqué par Malvern Panalytical, comme décrit dans la description ; et
une étape de pressage à chaud consistant à effectuer la compaction de la poudre de charbon à une température incluse dans une plage de températures de 600 °C ou plus et 1250 °C ou moins dans un environnement dépourvu d'oxygène pour obtenir un agglomérat.

2. Procédé de production d'un agglomérat principalement composé de carbone selon la revendication 1, dans lequel le premier charbon présente une teneur en matières volatiles inférieure à 13 % en masse sur base sèche.

3. Procédé de production d'un agglomérat principalement composé de carbone selon la revendication 1, dans lequel le premier charbon est un charbon traité thermiquement qui a été soumis à un traitement thermique.

4. Procédé de production d'un agglomérat principalement composé de carbone selon la revendication 1, le procédé comprenant en outre :
une étape de traitement thermique consistant à soumettre un second charbon à un traitement thermique pour obtenir un charbon traité thermiquement présentant des matières volatiles à raison de 1 % en masse ou plus et de moins de 20 % en masse sur une base sèche, les matières volatiles du second charbon étant mesurées selon « Coal and coke - Methods for proximate analysis » (JIS M 8812:2004) spécifié dans les normes industrielles japonaises (JIS), comme décrit dans la description,
dans lequel le charbon traité thermiquement est utilisé comme premier charbon dans l'étape de broyage.

5. Procédé de production d'un agglomérat principalement composé de carbone selon la revendication 4, dans lequel le charbon traité thermiquement présente une teneur en matières volatiles inférieure à 13 % en masse sur base sèche.

6. Procédé de production d'un agglomérat principalement composé de carbone selon la revendication 4 ou la revendication 5, dans lequel le second charbon est un charbon non agglomérant.

7. Procédé de production d'un agglomérat principalement composé de carbone selon l'une quelconque des revendications 3 à 6, dans lequel le traitement thermique est effectué à ou au-dessous d'une première température de 500 °C ou plus et de 1000 °C ou moins, et
la compaction est effectuée à ou au-dessus de la première température.

8. Procédé de production d'un agglomérat principalement composé de carbone selon l'une quelconque des revendications 1 à 7, dans lequel une pression de moulage de la compaction est de 20 MPa ou plus.

9. Procédé de production d'un agglomérat principalement composé de carbone selon l'une quelconque des revendications 1 à 8, dans lequel, lors de la compaction, le chauffage est démarré simultanément avec la mise sous pression ou après que la mise sous pression est démarrée.

10. Procédé de production d'un agglomérat principalement composé de carbone selon l'une quelconque des revendications 1 à 9, dans lequel le premier charbon est un charbon non agglomérant.
